# EUROPEAN PATENT APPLICATION

(11) **EP 1 260 459 A1**
(43) Date of publication of application: **27.11.2002**
(21) Application number: 02006748.4
(22) Date of filing: 25.03.2002
(51) Int. Cl.: B65G 17/06, B65G 17/08

(54) **Side-flexing conveyor belt**

(30) Priority: 16.05.2001 DK 200100773
(71) Applicant: uni-chains A/S, 7100 Vejle (DK)
(72) Inventor: Damkjaer, Poul Erik, 7120 Vejle (DK)
(74) Representative: Nielsen, Leif

(57) **Abstract**

Side-flexing conveyor belt for use in a conveyor comprising a number of chain links (1,2,3) which are joined together in a hinge like manner to form the belt, having at least one chain link arranged with a friction reducing wheel member (10) in an outer part of the belt and that said wheel member (10) is arranged in a plane parallel to the width plane of the conveyor belt. By arranging the wheel (10) in an outer part of the belt, a belt guidance and friction reducing effect is achieved, especially when the belt goes through a curve.

## Description

The present invention relates to a side-flexing conveyor belt for use in a conveyor comprising a number of chain links which are joined together in a hinge like manner.

Side-flexing conveyor belts built up from a large number of chain links, substantially as disclosed in the preamble of claim 1, are known in a number of different embodiments.

The individual chain links, and in many cases also the transverse rods which hold these together, are typically made of plastic by injection moulding or in another known manner. Plastic has many advantages which make the material suitable for this use, and therefore it is used to a great extent for straight-flow conveyor belts. If the conveyor belt is to be side-flexing, i.e. be capable of running in curves and/or spirals in the horizontal plane as well as up and down, ordinary conveyor belts of plastic and with plastic rods are of sufficient strength only if the belt is not loaded too much. This is due partly to the material and partly to the fact that the whole of the traction when the belt runs in curves is transferred along the edge of the belt outermost in the curve.

In order to compensate for this increased tension in the outermost sections of the belt in the curves, the belts have been given an increase in strength in the outer edge of the belt, for example by reinforcing or making the chain links with a greater amount of material or material thickness in this section of the chain link in comparison to the rest of the belt.

Example of this type of chain links and belts are known from for example European patent No 0663354 or US patent No 5547071.

It has also been attempted to strengthen the outer edge of the belt by attaching chain links or pivot rods outside the chain links themselves, for example in the shape of side plates which connect the pivot rods to ensure the transfer of the necessary traction or give the belt on its outermost edge the necessary tensile strength to withstand the stresses occurring when the belt goes through a curve.

In other applications one-sided reinforcement areas are arranged in the edge links, i.e. the areas at the outer edge of the belt where a thicker or a greater amount of material is used than in the rest of the belt. These areas are made so large that they extend over at least one eye part of each row of eye parts and in such a manner that there is room for at least one eye part to be replaced by a traction side plate which has considerably greater strength than the eye parts in the edge chain links. These chain links are often made of steel. Hereby is it achieved that a belt with a tensile strength of up to several times the magnitude of what is known from conventional belts is built, i.e. in the order of 3-6,000 kg, depending on the type of material the side plates are made of and depending on whether plastic or steel rods are used.

In those applications where the belt in itself can withstand the stresses arising in a curve, it is known to put wear parts on the outer edge of the belt which will partly diminish the friction in-between the belt and the side guiding member of the conveyor installation.

It has also been attempted to mount small plastic wheels on the inside edge of the belt in order to ease the belt along the curve.

Previously, it was also common to lubricate beneath and around the belt in order to diminish the friction between the belt and the conveyor guiding members. This lubrication consisted normally of water or some soap diluted into water. In many production lines it is not feasible to use water as a lubricant, as the water will destroy the goods transported on the belt. In again other applications environmental issues forbid the use of water or a combination of soap and water to be used as a lubricant. This is due to the fact that when you transport for example aluminium cans on the belt, the aluminium cans will rub on the top surface of the belt and scratch a little bit of the aluminium from the bottom of the cans. These aluminium particles will be suspended in the lubrication liquid and will eventually end up in the sewer system with huge costs connected with the cleaning of the lubrication water. Consequently, there is a desire to run these belt conveyors in a dry condition.

As production lines become increasingly sophisticated the speed of production and thereby the speed of the conveyor belt goes up. As the speed increased in the belt and especially in the curves the wear parts will melt due to the friction between the side guiding members of the conveyor and the wear parts arranged at the outer or inner edges of the belt. This then puts a limit on the speed with which the belt can run. Normally, belt conveyors run at a speed of 100 - 110 metres a minute, which is just below the speed at which the wear parts melt. Even in the applications mentioned above where it has been attempted to mount rollers on the side of the belt intended to be on the inside of the curve these have shown to be ineffective. This is due to the fact that liquid spilt from cans, dust or dirt in general gathers in the rolling mechanism and effectively acts as a brake on the roller, which thereby becomes stuck in the housing. When the roller cannot roll it effectively becomes a wear part, which will also melt due to friction heat with increased speed.

An additional problem with belts of this type, especially when they must have a certain width, is that when the belt goes through a curve with goods on it, it will have a tendency to wobble. This wobbling of the belt, i.e. the belt shows an unstable top surface, is due to the friction which arises at the innermost side of the belt, i.e. the side of the belt having the shortest turning radius. For example, when the belt is arranged to transport cans at 100 metres a minute, a break down or a wobble, which could lead to cans turning over, could very quickly lead to 150,000 or more cans being spread out over the production floor. This is of course an undesirable situation which is presently avoided by not running the belt at a high speed.

Furthermore, when running belts of this type in a dry condition the noise arising from the friction between the wear parts and the side guiding members of the conveyors as well as wobbling from the belt itself going through a curve is not desirable in a work environment.

It therefore appears that there exists a need for a belt of this type, i.e. a belt having very small spaces between the individual chain links to be able to run smoother and with less noise and reduced wobbling at an increased speed.

### Advantages of the invention

By configuring the conveyor belt according to the invention as disclosed in the characterising portion of claim 1, it is achieved that the belt is given the ability to run smoother through curves and spirals as well as up and down with less noise and at a higher speed.

The conveyor belt according to the invention as disclosed in claim 1 is distinguished in that at least one chain link is arranged with a friction reducing wheel member in an outer part of the belt and that said wheel member is arranged to reduce friction in a plane parallel to the width plane of the conveyor belt.

Typically, belts of this type are constructed as described in prior art document EP 0931736, wherein the belt is made out of at least two types of chain links which are assembled with rods to form an endless belt of the desired width and that in the conveying direction the different chain links are staggered in relation to one another like bricks in a wall. By configuring the different chain links with dimensions relative to each other, it is ensured that only minimal openings occur in the belt when it is running in curves and that the openings are generally distributed over the entire surface of the belt so that even small plastic bottles with point support bottoms, small containers or other objects which are desired to be conveyed on the belt cannot tip over when being conveyed.

When belts of this type are running through curves the greatest force, and thereby the greatest tension, will arise in the outer edge of the belt, i.e. the side of the belt having the greater radius through the curve. This also means that the belt in the outer edge portions will be the most stable part of the belt as it is stretched the most through the curve. Especially when the belt goes through tight curves the inner edge will be squeezed together and there will be a risk of buckling in the belt which will give the surface of the belt an unstable appearance and cause wobbling, which in turn can transmit the wobbling to the objects being transported on the belt.

It is therefore advantageous to arrange a guiding wheel at the outer edge of the belt as this is the most stable part of the belt and therefore the most stable guidance will be achieved in this section of the belt.

The wheel member is advantageously arranged around a member projecting downwardly from a chain link. This downwardly projecting member can be an integral part of the chain link or a separate part mounted to the chain link. A roller bearing or similar friction reducing member, for example a brass bush or the like, can be arranged between the downwardly projecting member of the chain link and the wheel body itself.

The downwardly projecting member is geometrically arranged so that the running surface of the wheel will be able to contact a guiding member on the conveyor construction itself. This guiding member on the conveyor construction can be in the shape of a side guiding member which is on the very outside of the belt and part of the conveyor super structure or in the shape of a guide rail arranged inside the outer edge of the chain belt.

Within this application the term "inner" shall be construed as meaning the side having the smallest curvature relating to the belt going through a curve. The meaning of the term "outer" is to be construed as being the section of the belt or chain link having the biggest radius of curvature. Normally, belts of this type run substantially horizontally and therefore, within the meaning of this application, the term "over" refers to the top side of the belt intended to place the items to be conveyed on, whereas the term "under" shall be construed as meaning the underside of the belt in the normal running position. Furthermore, it is contemplated within the scope of the invention that the belt can be arranged to turn both left and right in a relation to a longitudinal axis of the belt structure as such, but also belts turning only one way are considered within the scope of the invention. In the applications where the belts are required to turn both left and right throughout the course of the run through the production line, wheel members should be symmetrically arranged about a longitudinal central axis.

The wheel member itself comprises a central hollow part which is intended to receive the projecting member from the chain link. When the wheel is mounted on a projecting member a fastening member is arranged at the bottom of the projecting member which thereby fixes the wheel in a horizontal level in relation to the chain link. It is assured that the wheel is freely rotatable in this position. Other means for fastening the wheel member to the downwardly projecting member can also be contemplated, for example can a snap arrangement with resilient means in either the downwardly projecting member or the wheel member be arranged.

In further advantageous embodiments a roller bearing can be arranged between the projecting member and the wheel itself.

The top surface of the wheel, i.e. the surface facing the bottom of the belt, is advantageously curved or declines linearly towards the running face of the wheel. The running face of the wheel is in this connection defined as the vertical side of the wheel member. The downward curvature or descending linear top surface of the wheel member assures that when the belt bends, either by going up or going down in the conveyor, there is sufficient room for the belt to bend. The curvature or the linear descending characteristics of the top surface of the wheel member can be adapted to the radius through which the belt has to bend up or down.

The running surface of the wheel member is in further advantageous embodiments made of rubber. This fact serves two purposes. Firstly, it increases the friction between the wheel member and the guide member, whether this is the guide rail arranged inside the outer edge of the belt member or it is the side guide member arranged on the conveyor. The second purpose is to reduce the noise as the belt goes through a curve. It is known that rubber has good noise reduction properties and these are utilised in this application. The rubber running surface of the wheel can be an integral part of the wheel itself. During the production process of the wheel the rubber surface is cast or moulded integral with the wheel itself. Alternatively, the running surface can be mounted afterwards in the form of a rubber ring fitted into a groove in the vertical surface of the wheel.

In a number of applications the belts made solely from plastic are not strong enough. In such applications either of the connecting pins connecting each link in the hinge connection can be replaced by pins made out of steel. Also reinforcement in the shape of side plates as disclosed in European application no. EP 0931736 can be applied. The special measures are especially necessary when either the belt has to transport heavy goods for example filled bottles or heavy cartons and so forth or the belt has to go through curves with a very small radius which, as explained above, creates a large tension in the outer edge of the belt.

Usually these types of belts are made from plastic with plastic rods connecting the different chain links. However, reinforced plastics can also be used. Traditionally, the chain links are produced by an injection mould process which is known per se. The reinforcement plates discussed above can also be made of plastic, but are in preferred embodiments made of steel. For hygienic reasons especially stainless steel is desirable as the belts in the application where food stuff is conveyed on the belt conveyor are subjected to stringent hygienic measures which require often and thorough cleaning of the entire conveyor structure.

The invention will now be described in more detail with reference to the drawing where
- fig. 1: shows a section of a typical belt of the type used in conveyor systems within the meaning of the invention,
- fig. 2: shows a chain link with a wheel member mounted underneath adapted to run along a path guided by a guide rail,
- fig. 3: is identical to fig. 2, only the view is from below,
- fig. 4: shows a detailed view of one way of mounting the wheel on the projecting member,
- fig. 5: shows a chain link with a mounted wheel and indicates the reinforcing side plates arranged at the outer edge,
- fig. 6: illustrates a side view of a chain link going up/down,
- fig. 7: illustrates a side view of a chain link going up/down.

### Explanation of the embodiments according to the invention

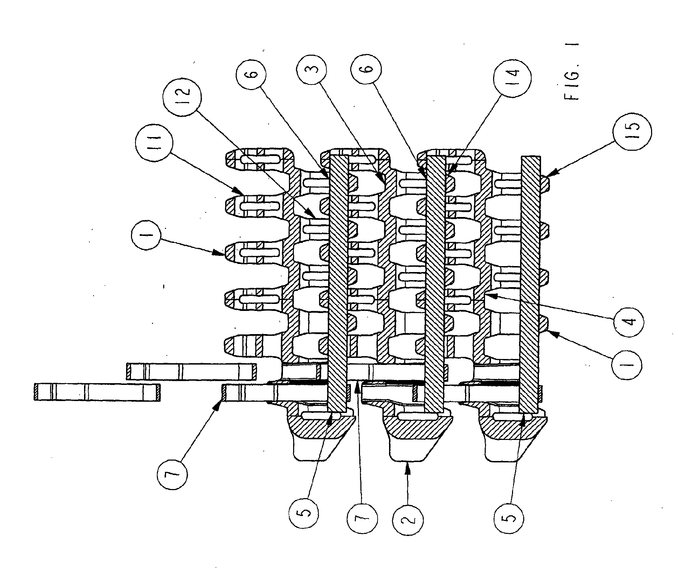

Conveyors of this type are usually constructed with a stainless steel super structure on which conveyor belts are fitted which are driven by electric or hydraulic motors. In this application the super structure is not shown and will not be further explained. Typically, the conveyor belts are constructed as illustrated in fig. 1. A plane section on one side of conveyor belts is shown. The conveyor belt can have optional running direction, which can go either way. The plane section of the belt illustrated in fig. 1 is composed of chain links 1,2 and module chain link 3,4 with transverse rods 5,6 going through openings 14,15 in the eye parts 11,12. The openings 14,15 are holes going through sections of the chain links in a horizontal direction transverse to the travelling direction of the belt. In this particular embodiment the reinforcing traction side plates 21 are illustrated as being mounted between the respective transverse rods 5,6.

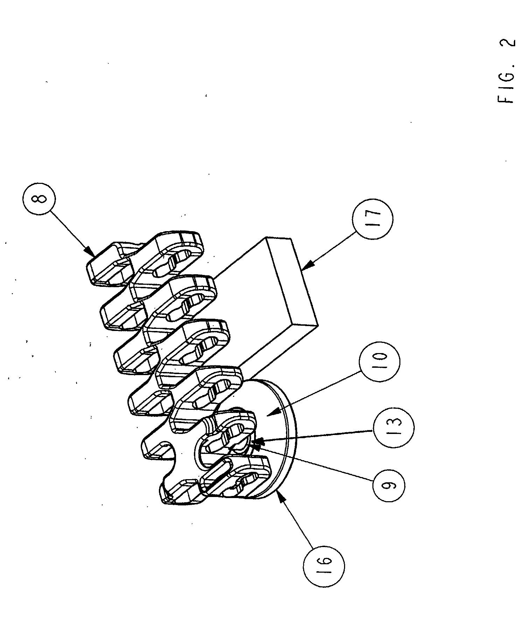

Turning now to fig. 2 a chain link 8 according to the invention is illustrated. In the vicinity of an outer edge of the chain link member 8, a downwardly projecting member 9 is arranged. This member can either be an integral part of the chain link or a separate member mounted during production of the chain link. On the downwardly projecting member 9, a wheel member 10 is rotatably arranged around the member 9. In this embodiment means 13 for ensuring the rotatability of the wheel member in relation to the chain link are illustrated. These means 13 to ensure the rotatability can be in the shape of a roller bearing or another similar member, for example a brass or nylon bush. The means to assure that the wheel can rotate are purely optional as the inventive scope, i.e. that the wheel can absorb and distribute some of the forces arising from the belt going through a curve, is assured as long as the wheel can rotate with or without the help of additional means.

It is further indicated on the running face of the wheel 10 that a rubber ring 16 can be arranged. This rubber ring serves a dual purpose. Firstly, it serves to dampen the noise arising from a huge number of chain links going through a curve at high speed, and secondly it serves the purpose of assuring a good friction between the wheel and its counter surface, for example a guide rail 17, so that the wheel 10 rotates and does not get stuck whereby it could wear down or melt due to the friction between the guide rail and the wheel material. In this embodiment the guide rail 17 is arranged inside the wheel member 10. The guide rail 17 is arranged at a distance whereby the belt going through a curve will have contact with the guide rail 17 via the wheel member 10 which will smoothen out and absorb some of the tension arising from the belt going through a curve.

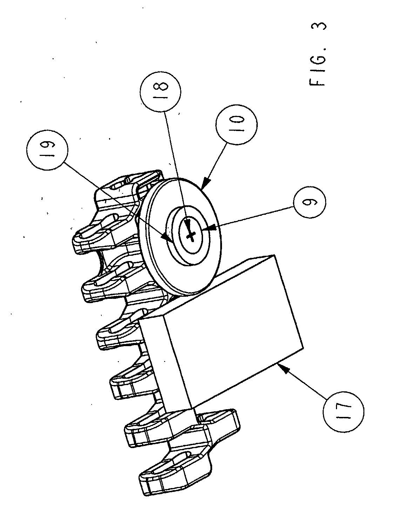

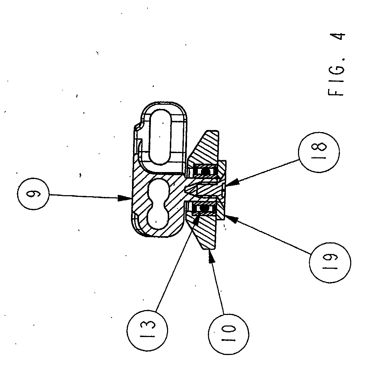

Fastening of the wheel member 10 to the downwardly projecting member 9 can for example be by means of a screw 18, which is fitted through a washer and screwed into the bottom end of the projecting member 9. Such an arrangement is shown in figure 3. In embodiments of the invention, where roller bearings are fitted between the wheel member 10 and the downwardly projecting member 9, the screw 18 and washer 19 are dimensioned so that they can keep both the roller bearing or a similar friction reducing member in place between the wheel and the downwardly projecting member 10. A cross section of this detail is shown in figure 4. Alternatively, a resilient snap arrangement can be employed.

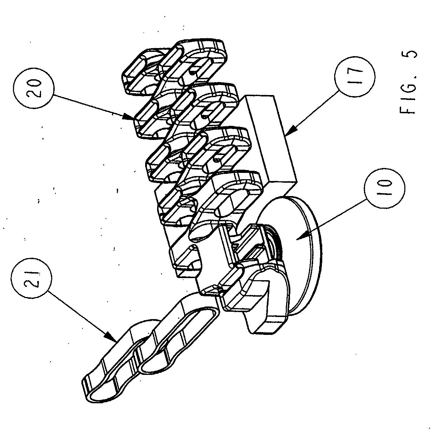

In figure 5 is illustrated an embodiment of the invention where the wheel member is arranged on a special chain link wherein the belt is made out of a number of these chain links which in their outer edge are adapted for receiving traction side plates 21. This type of belt is for special heavy-duty applications where the tension in the belts is greater that what can be absorbed by the transfer members 5,6. In such applications it is known to use traction side plates 21, for example made of steel, to transmit the huge stresses arising in the outer portions of the belts when they go through a curve. This is especially true if the curve diameter is small.

Different types of chain links are illustrated in the different figures. In figures 1 and 5 chain links especially for the conveyance of cans, bottles or other small containers are shown. These are distinguished in that the eye parts 11 have elongated holes in them. The advantage of this is that the surface of the belt actually touching the goods to be conveyed, for example soft drink cans or the like, is as small as possible. Hereby it is obtained that the friction on the underside of these cans is as small as possible, whereby the wear and thereby the wear off of aluminium particles is minimised. This in turn leads to less pollution, less dust in the work environment and an improved environment all together.

In figures 2 and 3 the eye parts are solid. This type of belt links are especially used in belts which are to convey packages and fresh food items. Here the wear on the objects to be conveyed is usually very minimal, but these types of belts lend themselves to very easy cleaning as they have fairly large surfaces which are easier to clean than the type of chain links shown and illustrated in figures 1 and 5.

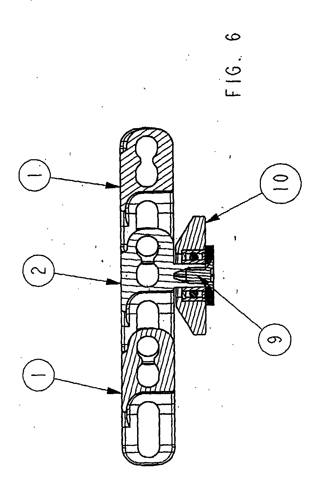

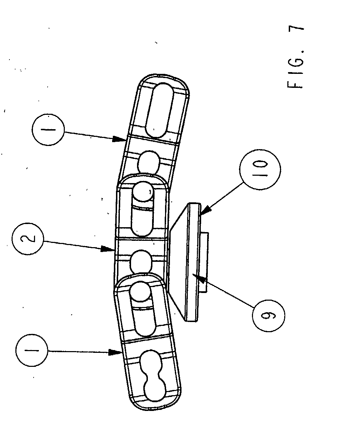

In applications where the conveyor belt needs to go upwardly or downwardly or around a driving sprocket wheel, the wheel member 10 is shaped with a conical upper surface. The upper surface can have a curved surface or be linearly descending towards the running edge. The curvature or degree of conicity is corresponding to the slope at which the belt has to go up and down or go around the sprocket wheel, which drives the entire belt. An illustration of this can be seen in figure 6 and 7. The wheel member 10 can be fitted to any kind of conveyor belt made out of a number of similar chain links. In figure 5 is illustrated a chain link adapted to be additionally fitted with side traction plates 21. These belts are especially adapted to heavy loads at high speed.

## Claims

1. Side-flexing conveyor belt for use in a conveyor comprising a number of chain links which are joined together in a hinge like manner to form the belt, **characterized in that** at least one chain link is arranged with a friction reducing wheel member in an outer part of the belt and that said wheel member is arranged to reduce friction in a plane parallel to the width plane of the conveyor belt.

2. Conveyor belt according to claim 1, **characterized in that** the wheel member is rotatably arranged on a projecting member on the chain link.

3. Conveyor belt according to claim 1, **characterized in that** the wheel member rotatably arranged on the projecting member is dimensioned either to be guided by a side guide member on the conveyor or be guided by a guide rail arranged on the conveyor belt.

4. Conveyor belt according to claim 2 or 3, **characterized in that** the projecting member is arranged to project downwardly from the underside of the belt.

5. Conveyor belt according to claim 1, **characterized in that** the wheel member on a exterior vertical running surface has a rubber layer.

6. Conveyor belt according to claim 1, **characterized in that** the wheel member has an upper surface which is either curving downwards or descending linearly from the centre of the wheel member towards the periphery of said wheel member.

7. Conveyor belt according to claim 4, **characterized in that** the rubber member is an integral part of the wheel member.

8. Side-flexing conveyor belt according to one or more of the preceding claims, **characterized in that** at least two types of chain links are used, i.e. edge chain links with reinforcement arranged for positioning in an outer part of the belt and marginal chain links arranged for positioning between the edge chain links and where the chain links of both types can be configured in various module widths so that the conveyor belt can be built up in the desired width and so that individual links are staggered in relation to one another in a commonly known manner and where each link comprises a first row of eye parts, preferably with equally large mutual intervals between them in the transverse direction and with elongated holes which are aligned with one another for the insertion of a transverse rod and a second row of eye parts positioned preferably midway between the eye parts of the first mentioned row and with openings aligned with one another for the insertion of a second transverse rod and that the two sets of eye parts are held together by a transversely extending bridge part wherein the reinforcement of the edge links extend over at least one eye part for each row so that at least one eye part is replaced by at least one traction side plate in each link, **in that** said plates have transverse openings corresponding to the openings and elongated holes in the eye parts and are in engagement with adjacent rods.
